(19) Europäisches Patentamt
European Patent Office
Office européen des brevets

(11) Publication number: **0 548 741 A2**

# (12) EUROPEAN PATENT APPLICATION

(21) Application number: **92121295.7**

(22) Date of filing: **15.12.92**

(51) Int. Cl.5: **C08L 71/02**, C08G 65/32, C08K 5/42, C08K 5/09, C08K 3/32

(30) Priority: **20.12.91 US 811774**

(43) Date of publication of application: **30.06.93 Bulletin 93/26**

(84) Designated Contracting States: **AT BE CH DE DK ES FR GB GR IT LI LU NL SE**

(71) Applicant: **The B.F. Goodrich Company**
**3925 Embassy Parkway**
**Akron Ohio 44313(US)**

(72) Inventor: **Lee, Biing-Lin**
**8005 West Ridge Drive**
**Broadview Heights, Ohio 44147(US)**
Inventor: **Mertzel, Elaine Audrey**
**22272 River Walk Road**
**Rocky River, Ohio 44116(US)**
Inventor: **Sullivan, Francis Ryan**
**1401 Lynn Park Drive**
**Cleveland Heights, Ohio 44121(US)**
Inventor: **Yu, Simon Hsiao-Pao**
**1812 Farr's Garden Path**
**Westlake, Ohio 44145(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1 (DE)**

## (54) Chain extended low molecular weight polyoxirane salt complexes for electrostatic applications.

(57) The present invention relates to electrostatic dissipative polymeric compositions comprising an effective amount of a chain extended polymer, a salt or salt complex and a matrix polymer or matrix polymer blend. The chain extended polymer of the subject invention has electrostatic dissipative properties and is formed from low molecular weight polyethers which are reacted with a chain extender. This will furnish an additive having electrostatic dissipative properties. The properties of the chain extended polymer are enhanced by the addition of a salt or salt complex.

EP 0 548 741 A2

## Field of the Invention

This invention relates to a new polymeric composition having electrostatic dissipative properties. These new compositions are comprised of a matrix polymer, a chain extended polymer and a salt. The chain extended polymers are formed from low molecular weight polyether oligomers which have been reacted with a chain extender to form a high molecular weight polymers.

These compositions are stable at high processing temperatures and do not cause blooming in the finished product. The present invention also relates to plastic articles which are formed from these new polymeric compositions.

## Background of the Invention

The formation and retention of charges of static electricity on the surface of most plastics is well known. Plastic materials have a significant tendency to accumulate static electrical charges due to low electrical conductivity. The presence of static electrical charges on sheets of thermoplastic film, for example, can cause the sheets to adhere to one another thus making their separation for further processing more difficult. Moreover, the presence of static electrical charges causes dust to adhere to items packaged in a plastic bag, for example, which may negate any sales appeal.

The increasing complexity and sensitivity of microelectronic devices makes the control of static discharge of particular concern to the electronic industry. Even a low voltage discharge can cause severe damage to sensitive devices. The need to control static charge buildup and dissipation often requires the total assembly environment to be constructed of partially conductive materials. It also may require electrostatic protective packages, tote boxes, casings, and covers be made from conductive polymeric materials to store, ship, protect, or support electrical devices and equipment.

The prevention of the buildup of static electrical charges which accumulate on plastics during manufacturing or use has been prevented by the use of various electrostatic dissipative (ESD) materials. These materials can be applied as a coating which may be sprayed or dip coated on the article after manufacture although this method usually results in a temporary solution. Alternatively these materials can be incorporated into the polymer during processing thereby providing a greater measure of permanence.

However, the incorporation of these lower molecular weight electrostatic dissipative materials (antistatic agents) into the various polymers has its own limitations. For example, the hot temperatures required for conventional processing may damage or destroy the antistatic agents. These could be rendered useless with respect to their ESD properties. Further, many of the higher molecular weight ESD agents are not miscible with the matrix polymers employed.

Another problem encountered is loss of transparency. If the refractive indices of the ESD additive and the matrix polymer in a polymer composition differ by more than about 0.02, there can be a substantial reduction in the transparency of the composition. These compositions may be unacceptable for transparent applications. For example, in an immiscible polymer blend where the dispersed phase particle size is greater than 0.1 micron, the smaller the difference in the refractive indices between the additives and the matrix polymer the greater the clarity of the article made from the mixture.

Other antistatic agents have significantly lower molecular weights than the matrix polymers themselves. Often these lower molecular weight antistatic agents possess undesirable lubricating properties and are difficult to incorporate into the polymer. Incorporation of the lower molecular weight antistatic agents into the polymers often will reduce the moldability of the matrix polymer because the antistatic agents can move to the surface of the plastic during processing and frequently deposit a coating on the surface of the molds, possibly destroying the surface finish on the articles of manufacture. In severe cases, the surface of the article of manufacture becomes quite oily and marbleized. Additional problems which can occur with lower molecular weight ESD agents are loss of their electrostatic dissipative capability due to evaporation, the development of undesirable odors, or promotion of stress cracking or crazing on the surface of an article in contact with the article of manufacture.

One of the known lower molecular weight antistatic agents is a homopolymer or copolymer oligomer of ethylene oxide. Generally, use of the lower molecular weight polymers of ethylene oxide or polyethers as antistatic agents are limited by the above-mentioned problems relative to lubricity, surface problems, or less effective ESD properties. Further, these low molecular weight polymers can be easily extracted or abraded from the matrix polymer thereby relinquishing any electrostatic dissipative properties.

There are several examples of high molecular weight electrostatic dissipative agents in the prior art. In general these additives have been high molecular weight polymers of ethylene oxide or a derivative thereof like propylene oxide, epichlorohydrin, glycidyl ethers and the like. It has been a requirement that these

additives be high molecular weight materials to overcome the problems mentioned above. However, these prior art ESD additives result in articles having high haze values and thus are not transparent enough for some end uses.

Also, these high molecular weight polymers suffer from the presence of cyclic oligomers and residual monomers which limit their utility. Chain extending a low molecular weight polyoxiane represents a significant improvement over these materials when used in conjunction with other polymers with which they are immiscible.

Blends of immiscible polymers can assume many differing morphologies depending on a variety of different polymer properties. These include properties like molecular weight, relative viscosity, volume fraction of the various components, relative surface energies of the components, etc. Processing conditions can also affect morphology. The study of the polymer morphology in immiscible polymers is a growing area of research interest, which at present is not fully understood. In a typical case, one polymer, the dispersed phase, when mixed at low loadings with another, the continuous or matrix phase polymer, will take the form of spherical or elongated droplets or layered of structures. As the volume fraction of the dispersed phase increases, the morphology changes until a point is reached where co-continuous phases can exist. At low loading levels, the material present in the largest volume fraction will dominate the physical properties. Therefore with low loading levels there will be minimal effect on the physical properties of the matrix polymer.

If in addition co-continuity or connectivity of the dispersed phase can be achieved at low loading levels and the dispersed phase is a conductive material then useful thermoplastic electrostatic dissipative blends can be achieved. However, in the usual cases, large amounts of dispersed polymer are necessary to achieve conductivity which may compromise the physical properties of the blend.

For blends of matrix polymers with conducting materials such as metals or carbon black, a percolation threshold must be exceeded before significant conductivity is achieved. Adding conducting materials to a polymer has little effect on electrical properties until this threshold is reached. The threshold is characterized by a sudden increase in the conductivity observed and is recognized as the point at which conducting networks are formed throughout the matrix polymer. This point can be at relatively high volume fractions of conducting material and is dependent upon a wide variety of factors. For example, for monodisperse silver sphere filled composites the volume fraction necessary to achieve the onset of conductivity for metal particles in Bakelite is listed at 30%, J. Gurland, Trans. Metall Soc. AIME, Vol. 236, P. 642 (1966).

Doping polyethers with various salts to dramatically increase their conductivity is well known in the art (see for example **P.V. Wright, British Polymer Journal, Vol. 7, P. 319 (1975).** However, dispersing these materials in a matrix polymer does not guarantee connectivity of the conducting phase unless the volume fraction of the doped polyethers are quite high, *e.g.* near the phase inversion point.

These polyethers and their salt complexes are usually low Tg rubbery materials with poor tensile and flexural properties. Utilizing large amounts of a rubbery polymer to achieve co-continuity will have a detrimental effect on these desirable properties. What is desirable is to retain the maximum in physical properties while attaining the electrical properties in the matrix polymer at low loadings of the polyethers.

## SUMMARY OF THE INVENTION

The present invention relates to an ESD additive comprising a chain extended polymer and at least one or more salts or salt complexes. The chain extended polymer is formed from low molecular weight polyethers which are reacted with a chain extender to furnish a useful additive. The chain extended polymer is blended with the salt(s) to furnish the ESD additive. We have found that the salt doped polyether-urethanes of this invention can be dispersed in the matrix polymer at sufficiently low volume fraction of the lower Tg materials to retain most of the desirable properties of the matrix material.

The chain extended polymers of this invention can be modified by varying the molecular weight of the polyether oligomer or the nature of the chain extender so that the physical, electrical, or optical properties can be tailored for specific applications. For example, the index of refraction of an ESD polymer can then be matched to that of a matrix polymer thereby providing a clear composition. The properties of the chain extended polymer of this invention can also be altered by the addition of a modifier. It has also been found that addition of a salt(s) or a salt complex(es) to the chain extended polymer can enhance the ESD properties of the matrix polymer/ESD composition. A salt or salt complex can also improve the clarity of the composition.

The present invention further relates to electrostatic dissipative polymeric compositions comprising an effective amount of the chain extended polymer mixed with a salt(s) or salt complex(es) and a matrix polymer. The chain extended polymer/salt composition are effective as a static dissipative agent when the

chain extended polymer is present in an amount sufficient to form a co-continuous phase. Typically this amount will range from about 3 parts to about 100 parts by weight per 100 parts by weight of the matrix polymer in the polymeric composition. The present invention further relates to a process for preparing the electrostatic dissipative polymeric compositions by adding to a matrix polymer an effective amount of the chain extended polymer and a salt or salt complex.

The electrostatic dissipative polymeric composition of the present invention comprises (I) a chain extended polymer having electrostatic dissipative properties comprising (A) a low molecular weight polyether oligomer having two reactive moieties and an average molecular weight from about 200 to about 10,000 wherein the oligomer is a homopolymer or a copolymer of two or more copolymerizable cyclic ether monomers having the formula:

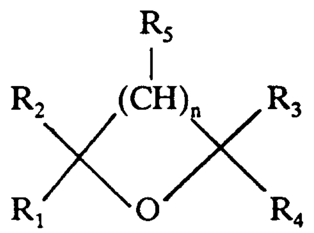

wherein $R_1$, $R_2$, $R_3$, $R_4$, and $R_5$ are independently hydrogen, unsubstituted or substituted alkyl, cycloalkyl, cycloalkenyl, aryl, aralkyl or alkaryl, the substituents are $OR_6$, $SR_6$, CN or halogens, $R_6$ is independently hydrogen, alkyl, cycloalkyl, cycloalkenyl, aryl, aralkyl, alkaryl, or carboxyl, the reactive moieties are OH, $NH_2$, or $NHR_6$, n is 0, 1, 2, or 4; (B) from about 0 moles to about 35 moles of a modifier for each mole of low molecular weight polyether and (C) a chain extender; with the proviso that the number of moles of chain extender per mole of the sum of the number of moles of low molecular weight polyether oligomer plus the number of moles of modifier is from about 0.95 to about 1.06 and (D) from about 0.5 part to about 25 parts of at least one salt for each 100 parts of chain extended polymer and (II) at least one matrix polymer. In a preferred embodiment the number of moles of chain extender per mole of the sum of the number of moles of low molecular weight polyether oligomer plus the number of moles of modifier is from about 0.97 to about 1.03. By low molecular weight oligomer, it is meant that the polyether will have an average molecular weight from about 200 to about 10,000 and preferably from about 500 to about 5000, as determined by end group analysis. The reaction of the low molecular weight oligomer with a chain extender will furnish a chain extended polymer having melt indices from 0.05 to 110 grams per ten minutes. The preferred melt index range of the chain extended polymer will be from about 1.0 to 65 grams/10 minutes. The melt index is determined according to ASTM D-1238 Procedure A at a barrel temperature of 190°C and an 8700 gram piston load.

ESD additives are generally very rubbery materials. The physical properties of the composition suffers when large amounts of these additives are employed. Due to the low levels of the electrostatic dissipative additives added, the physical properties of the compositions of the subject invention do not suffer as would be the case if larger amounts of EDS additives were employed.

The ESD compositions, the chain extended polymer and salt blends of this invention can also be employed as an electrostatic coating. These materials could be applied using any conventional method such as spraying, dipping, painting and the like.

In a preferred embodiment the low molecular weight oligomer employed is a polymer of cyclic ether monomers having the formula:

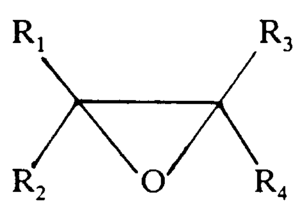

In a more preferred embodiment the low molecular weight oligomer employed is a polymer of cyclic ether monomers wherein $R_1$, $R_2$ and $R_3$ are hydrogen and $R_4$ is H, $CH_3$, or $CH_2X$ wherein X is a halogen, $OR_6$, or $COOR_6$, and $R_6$ is as defined hereinabove. The most preferred cyclic ether is ethylene oxide.

In an alternative embodiment the low molecular weight polyether oligomer is end capped with ethylene oxide or ethylene imine thereby providing an oligomer which will have two primary moieties.

The alkyl groups can have from 1 to 6 carbon atoms, be straight or branched chain and may be unsubstituted or substituted. The alkenyl groups can have from 1 to 6 carbon atoms, be straight or branched chain, have 1 or two double bonds and be unsubstituted or substituted.

The cycloalkyl and cycloalkenyl groups can have from 3 to 8 ring carbon atoms and from 1 to 3 rings. The cycloalkenyl groups can have 1 or 2 double bonds.

The aryl groups can have from 6 to 10 ring carbon atoms and one or two rings.

Useful polyether oligomers are linear polymers having the general formula:

$$M\text{-}CR_1R_2(\overset{\overset{R_5}{|}}{C}H)_n\text{-}CR_3R_4\text{-}[OCR_1R_2(\overset{\overset{R_5}{|}}{C}H)_n\text{-}CR_3R_4]_x\text{-}M$$

wherein X + 1 is the number of repeating ether units, each M is a reactive moiety, n is O, 1,2, or 4 and $R_1$, $R_2$, $R_3$, $R_4$ and $R_5$ are as defined hereinabove. The most common M is the OH group. For the subject invention X + 1 is at least 4 and between 4 and about 250. On a molecular weight basis, the useful range of polyether oligomers have an average molecular weight from about 200 to 10,000 and preferably from about 500 to 5000. Commercially available polyethylene glycols useful in this invention are typically designated as polyethylene glycol 600, polyethylene glycol 1450, and polyethylene glycol 4000.

The polyether oligomer can be a homopolymer or a copolymer of two or more copolymerizable monomers. Some examples of monomers are ethylene oxide, propylene oxide, 1,2-butylene oxide, epichlorohydrin, allyl glycidyl ether, n-butyl glycidyl ether, glycidyl acrylate, glycidyl methacrylate, 2-ethylhexyl glycidyl ether, tetrahydrofuran, or styrene oxide.

The term salt, salt complex or salt compound as defined herein is a compound formed by the union of a metal ion with a non-metallic ion or molecule. Several examples of salts useful in the subject invention are lithium trifluoromethyl sulfonate, sodium or lithium lauryl sulfate, sodium styrene sulfate, dipotassium phosphate, lithium perchlorate and the like. The preferred salts are lithium trifluoromethyl sulfonate and sodium styrene sulfonate. These salts may be free flowing, granular, or be attached to a polymeric backbone thereby reducing the possibility of the salts being extracted from the matrix polymer.

The present invention does not contemplate incorporation of amines or ammonium groups into the compositions. For matrix polymers such as polyvinyl chloride the presence of amines or ammonium groups is undesirable as these groups are known to be detrimental to these polymer compositions. When PVC compositions which contain these groups are heated they will discolor.

The amount of salt(s) to be employed in the compositions of the present invention will be from about 0.5 parts to about 25 parts of salt(s) for each 100 parts of chain extended polymer. In a preferred form the composition will have from about 1.0 parts to about 20 parts of salt(s) for each 100 parts of chain extended polymer. The most preferred composition will have from about 1.5 to about 15 parts of salt(s).

The present invention also relates to electrostatic dissipative polymeric compositions comprising an effective amount of the chain extended polymer/salt composition and a matrix polymer or matrix polymer blend. The chain extended polymer/salt compositions are effective as a static dissipative agent when the chain extended polymer is present in an amount sufficient to form a cocontinuous phase. The amount of chain extended polymer/salt composition required is in the range of from about 3 parts to about 100 parts by weight wherein the total of the matrix polymer or polymer blend 100 parts by weight. In a preferred form the composition can have from about 5 parts to about 35 parts of the chain extended polymer/salt composition per 100 parts by weight of the matrix polymer or matrix polymer blend. A more preferred composition will have from about 10 parts to about 25 parts of chain extended polymer or matrix polymer blend.

For the purpose of this application, a co-continuous phase is defined as the point at which conductivity increases. This is commonly recognized as the point at which a conducting networks is formed throughout the matrix polymer. At this point the resistivities of the polymer compositions will begin to drop.

There are several applications for electrostatic dissipative materials which have a high degree of clarity. It is well known in the art that the matching of the refractive index of two or more polymers in an immiscible polymeric blend is generally required to achieve a high degree of clarity. The requirements for transparent materials are also dependent upon the thickness of the specimen. Generally, for transparent applications the refractive indices of the components of the polymeric composition can differ from about 0.01 to about

0.1. In a preferred form the difference in refractive indices of the matrix polymer and the chain extended polymer/salt composition will be about 0.02. In general, if the refractive index between the two materials differs by more than 0.02, there is a substantial reduction in the transparency of the composition. Refractive indices are measured using a film having a thickness of about 0.5mm or less and the sodium D line on standard equipment, well known in the art.

It has been found that altering the percentage of the polyether oligomer in the chain extended polymer can cause the refractive index of the polymer to be changed. The desired percent of oligomer in the chain extended polymer will depend upon the molecular weight of the oligomer, the chain extender, the modifier, if implemented, and the matrix polymer employed. The percentages may be different for various matrix polymers and can be determined by experimentation.

The clarity of the composition will depend upon amount of the ESD additive in the composition. It has also been found that the addition of a salt to the chain extended polymer can alter the refractive index of the polymer. Also, addition of a salt to an ESD additive/matrix polymer composition can improve the transparency of the composition by altering the crystal lattice of the polymers.

The present invention also relates to a clear polyvinyl chloride composition comprising polyvinyl chloride and an effective amount of an electrostatic dissipative/salt composition additive said composition having the following electrical properties:

(a) surface resistivity of less than about 1 x $10^{12}$ Ohms/sq, as measured according to ASTM D-257; or

(b) volume resistivity of less than about 1 x $10^{12}$ Ohms-cm, as measured according to ASTM D-257.

Clarity can be defined as follows:

(I) a percent light transmission greater than 50% for 20 mil film as measured according to ASTM D-1003-61; and

(II) a percent haze value less than 60% for a 20 mil film as measured according to ASTM D-1003-61.

In a preferred embodiment the surface resistivity will be less than about 1 x $10^{12}$ Ohms/sq, and the volume resistivity will be less than about 1 x $10^{12}$ Ohms-cm. In the most preferred embodiment the surface resistivity of composition will be less than about 1 x $10^{11}$ Ohms/sq, and the volume resistivity less than about 1 x $10^{11}$ Ohms-cm. The preferred light transmission is greater than 70% for a 20 mil film as measured according to ASTM D-1003-61. The preferred haze value is less than 30% for a 20 mil film. The most preferred light transmission is greater than 80% for a 20 mil film as measured according to ASTM D-1003-61. The most preferred haze value is less than 20% for a 20 mil film.

Surface and volume resistivity testing is conducted in accordance with ASTM D257. An adapter compresses an upper electrode and a lower circular electrode encircled with a ringing electrode. A sheet sample (3.5 inches in diameter and 1/8-1/16 inch thick) was placed between the upper and lower electrodes, and a voltage of 500 volts was applied between the electrodes. After 60 seconds, the resistance was recorded using an ohmmeter and converted into surface resistivity in Ohms/square or volume resistivity in Ohms-cm. The static decay test is carried out in accordance with Federal Test Method Standard 101B, Method 4046.1, "Electrostatic Properties of Materials" with a Static Decay Meter, model 406C obtained, from Electro-Tech Systems, Inc. Static decay is a measure of the ability of a material, when grounded, to dissipate a known charge that has been induced on the surface of the material. A sheet sample (3" x 6") with 1/8-1/16 inch thickness is placed between clamp electrodes contained in a Faraday cage. A 5,000 volt positive charge is applied to the surface of the specimen and the time in seconds required to dissipate the charge to 500 volts (10% of its initial value) or to less than 50 volts refered to as 0% after a ground is provided, is then measured. This test was run on unconditioned samples and on samples conditioned for 48 hours at 15% relativity humidity (RH).

The matrix polymer as defined herein can be a homopolymer or a copolymer for example, polyvinyl chloride, chlorinated polyvinyl chloride, copolymers of styrene and acrylonitrile, terpolymers of styrene, acrylonitrile, and diene rubber, copolymers of styrene and acrylonitrile modified with an acrylate elastomer, copolymers of styrene and acrylonitrile modified with ethylene propylene diene monomer rubber, polystyrene and rubber modified impact polystyrene, nylon, polycarbonate, thermoplastic polyesters including polybutylene terephthalate, polyethylene terephthalate and polyether-ester block copolymers, polyurethane, polyphenylene oxide, polyacetal, polymethyl methacrylate. The matrix polymer can be further blended with one or more other polymeric materials, e.g., another matrix polymer, along with the electrostatic dissipative additive or other additives known in the art.

Polyvinyl chloride, PVC, vinyl polymer, or vinyl polymer material, as used herein, refers to homopolymers and copolymers of vinyl halides and vinylidene halides and includes post halogenated vinyl halides such as CPVC. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal

$CH_2=C<$ grouping. As examples of such olefinic monomers there may be mentioned the $\alpha,\beta$-olefinically unsaturated carboxylic acids, such as acrylic acid, methacrylic acid, ethacrylic acid, $\alpha$-cyanoacrylic acid, and the like; esters of acrylic acid, such as methyl acrylate, ethyl acrylate, butyl acrylate, octyl acrylate, cyanoethyl acrylate, hydroxyethyl acrylate, and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butyoxy methylacrylamide, and the like; vinyl ethers, such as ethyl vinyl ether, chloroethyl vinyl ether, and the like; the vinyl ketones; styrene and styrene derivatives, such as $\alpha$-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art.

The present invention is particularly applicable to homopolymers and copolymers made by the polymerization of vinyl chloride or vinylidene chloride alone or in admixture with one or more polymerizable olefinic monomers copolymerizable therewith in amounts up to about 20% by weight, based on the weight of the monomer mixtures. Some copolymers have a tendency to decrease the clarity of the article and therefor the comonomer amount in the copolymer should be minimized. The most preferred vinyl polymer, or resin, is polyvinyl chloride (PVC) homopolymer produced by the mass or suspension polymerization process and the invention, for simplicity and convenience, will be described in connection therewith, it being understood that this merely intended in an illustrative sense and not limitative. Articles of this invention may be made from resins produced by the suspension, mass, emulsion or solution processes.

Another PVC useful in the practice of the subject invention is prepared by the method of Jones, et al. in U.S. Patent No. 4,070,534 hereby incorporated by reference into the present specification. The Jones reference teaches the use of tetrahydrofuran (THF) as a solvent which is added to the monomers prior to the initiation of polymerization. The PVC prepared by this process will have increased heat stability over that of known commercial PVC.

In accordance with the present invention, the low molecular weight polyether oligomer intermediate and the non-hindered diisocyanate are coreacted simultaneously in a one-shot polymerization process at a temperature above about 100°C and usually about 120°C, whereupon the reaction is exothermic and the reaction temperature is increased to about 200°C to 285°C.

At times, the polyether oligomer can be blended with a glycol or a diamine modifier before reaction with a diisocyanate. The glycol modifier may be any diol (i.e., glycol) or combination of diols, containing 2 to 10 carbon atoms, such as ethylene glycol, 1,3-propanediol, propylene glycol, 1,4-butanediol, 1,3-butanediol, 1,5-pentanediol, 1,6-hexanediol,diethylene glycol, 1,4-cyclohexane dimethanol, neopentyl glycol, hydroquinone bis(2-hydroxyethyl) ether, or any aliphatic or aromatic molecule containing two reactive hydroxyl groups. The preferred glycol modifier is 1,4-butanediol.

Further, the diamine modifiers can be any diamine or combination of diamines, containing 0 or 2 to 10 carbon atoms, such as hydrazine, ethylene diamine, 1,3-diamino-propane, aminoaniline and the like.

In general, for each mole of polyether oligomer employed, the amount of chain extender employed will be about 1.0 moles. If a glycol or diamine modifier is employed, the sum of the moles of the modifier plus the moles of polyether oligomer will be at a ratio of about 1.0 mole for each 1.0 mole of chain extender.

The hydroxyl or amino terminated polyols described above can be blended with a glycol or diamine modifier before the blend is reacted with a polyisocyanate or the polyol and the modifier can be brought to the reaction zone simultaneously. If desired, the polyol can be reacted with the diisocyanate, then the prepolymer is reacted with the modifier. Stabilizers such as antioxidants can be added prior to the reaction or during the reaction.

The amount of glycol or diamine modifier is generally from about 0 to about 35 moles and desirably from about 0 to about 20 moles for every mole of low molecular weight polyether oligomer. Generally, the number of moles of diisocyanate per total of the number of moles of the low molecular weight polyether oligomer plus the number of moles of modifier is from about 0.95 to about 1.06 and preferably from about 0.97 to about 1.03.

In an alternative procedure two or more of the polyether oligomers can be reacted with a chain extender to furnish an oligomer dimer or trimer. These dimers or trimers can then be chain extended under similar conditions to form the high molecular weight polymer. This procedure can be used to produce a high molecular weight chain extended polymer with varying chain extender groups.

Conventional chain extenders are molecules having two functional groups (reactive sites) which will react with the reactive moieties of the polyethers.

The reactive moieties typically occur at the ends of the polyether oligomers as a result of routine synthesis, however the reactive moieties can be located at locations other than the ends. Generally, these

are hydroxyl groups, although this group may be substituted by any of several other reactive groups which can then react with another function group on the chain extender. The reactive moieties most useful for the present invention are OH, $NH_2$ and $NHR_6$. In a preferred form the reactive moieties are OH, $NH_2$ or $NHR_6$ and are on primary carbon atoms. The most preferred reactive moiety is OH.

Some examples of these chain extenders are organic diacids, acid derivatives, such as diesters, diacyl halides, and the like, diisocyanates or any other difunctional molecule or oligomer which can react with the polyether oligomer moieties. Some examples of useful diacid derivatives are diethyl or dimethyl esters of carbonic acid, oxalic acid, malonic acid, succinic acid, glutaric acid, adipic acid, pimelic acid, sebacic acid, phthalic acid, and the like. Acyl halides which are effective in this invention are acyl chlorides of carbonic acid, oxalic acid, malonic acid, succinic acid, glutaric acid, adipic acid, pimelic acid, sebacic acid, phthalic acid and the like.

Any conventional diisocyanate can be used, either aliphatic or aromatic. In a preferred embodiment diisocyanates are the chain extenders utilized. Suitable diisocyanates include, for example, 1,4-diisocyanatobenzene (PPDI), 4,4'-methylenebis(phenylisocyanate)(MDI),4,4'-methylenebis(3-methoxyphenyl isocyanate), 1,5-naphthalene diisocyanate (NDI), toluene diisocyanate (TDI), m-xylene diisocyanate (XDI), 1,4-cyclohexyl diisocyanate (CHDI), 1,10-diisocyanatonaphthylene, and 4,4'-methylenebis-(cyclohexyl isocyanate) ($H_{12}$ MDI). The most preferred diisocyanate is MDI.

The subject invention contemplates the process for preparing an electrostatic dissipative polymeric composition comprising the steps of adding to a matrix polymer an effective amount of the chain extended polymer and mixing the polymers to produce the electrostatic dissipative composition.

The compositions of the present invention are useful for a variety of applications. Some examples are tubes, paper trays, floor tiles, business machine housings, part for use within a business machine, antistatic mat, tote bins, and polymeric sheet or films.

Various conventional additives can be utilized in the compositions of the present invention. Thus, heat stabilizers, lubricants, heat distortion additives, impact modifiers, fire retardants, antioxidants, UV inhibitors, and processing aids generally employed for use in polymers, can be implemented. Moreover, plasticizers, such as those typically used and known to one skilled in the art can also be utilized. Various fillers and pigments can also be employed in conventional amounts. The amounts and types of additives, fillers and/or pigments required are well known to those skilled in the art.

**EXAMPLES**

The invention will now be illustrated by examples. The examples are not intended to be limiting of the scope of the present invention. In conjunction with the general and detailed description above, the examples provide further understanding of the present invention and demonstrates some of the preferred embodiments of the invention.

The following Example Nos. 1 to 5 describe the preparation of several chain extended polymers. Example 6 illustrates the methods for blending the chain extended polymer with a matrix polymer. Example Nos. 7 to 10 describe various compositions that were prepared and tested and the results of the tests, *i.e.,* measurement of the electrical and optical properties, that were carried out to evaluate the materials. Examples 11 to 13 describe preparation of compositions having the chain extended polymer and a salt. The data for these examples is shown and compared with samples without salt in tables VI to VIII. Example 14 compares a standard resin having an (IV) intrinsic viscosity of 0.86 to a resin prepared by the method of Jones *et al*. The Jones resin was treated with a phosphorous based salt. This example demonstrates that the versitility of the invention as the Jones resin exhibited improved static decay.

In general, the examples described hereinbelow have been optimized for polyvinyl chloride. Further experimentation would allow an investigator to optimize the properties and get a chain extended polymer salt composition useful for any matrix polymer system.

Example 1

Polyethylene glycol (Dow E-600), 0.2 moles (121 grams) having a molecular weight of 603 as determined by end group analysis was reacted with 0.201 moles (50.25 grams) of 4,4'-methylene-bis(phenyl isocyanate) (MDI) by a standard high temperature random melt polymerization procedure. The polymerization procedure involved heating the polyether and MDI separately to about 100 °C and then mixing the ingredients. The reaction is exothermic and raises the temperature to about 200 to 285 °C in about 1 to 5 minutes, during which time polymerization takes place as evidenced by an increase in viscosity.

The sample was molded into a plaque and the physical properties were measured. The sample had a volume resistivity of 4.9 x $10^{10}$ Ohms-cm and a surface resistivity of 8.7 x $10^{12}$ Ohms/sq.

Example 2

Polyurethane 45

Polyethylene glycol (Dow E-1450), 0.2 moles (290 grams) having a molecular weight of 1450 as determined by end group analysis was blended at 60°C with 0.844 moles (76.064 grams) of 1,4-butane diol. This blend or physical mixture was then reacted with 1.044 moles (26.27 grams) of 4,4'-methylene-bis-(phenyl isocyanate) (MDI) by a standard high temperature random melt polymerization procedure as described in Example 1. The sample was molded into a plaque and the physical properties were measured. The sample had a volume resistivity of 5.4 x $10^{10}$ Ohms-cm, a surface resistivity of 6.0 x $10^{11}$ Ohms/sq and a refractive index of 1.551.

Example 3

Polyurethane 56

Polyethylene glycol (Dow E-1450), 0.2 moles (278 grams) having a molecular weight of 1390 as determined by end group analysis was blended at 60°C with 0.496 moles (44.6 grams) of 1,4-butane diol. This blend or physical mixture was then reacted with 0.696 moles (174 grams) of 4,4'-methylene-bis (phenyl isocyanate) (MDI) by a standard high temperature random melt polymerization procedure as described in Example 1. The sample was molded into a plaque and the physical properties were measured. The sample had a volume resistivity of 4.2 x $10^{10}$ Ohms-cm and a refractive index of 1.541.

Example 4

Polyurethane 64

Polyethylene glycol (Dow E-1450), 0.4 moles (580 grams) having a molecular weight of 1450 was blended at 60°C with 0.667 moles (60 grams) of 1,4-butane diol. This blend or physical mixture was then reacted with 1.078 moles (269.5 grams) of 4,4'-methylene-bis(phenyl isocyanate) (MDI) by a standard high temperature random melt polymerization procedure as described in Example 1. The sample was molded into a plaque and the physical properties were measured. The sample had a volume resistivity of 3.6 x $10^9$ Ohms-cm, a surface resistivity of 4.7 x $10^{10}$ Ohms/sq, and a refractive index of 1.529.

Example 5

Polyurethane 72

Polyethylene glycol (Dow E-1450), 0.3 moles (426 grams) having a molecular weight of 1420 as determined by end group analysis was blended at 60°C with 0.267 moles (24 grams) of 1,4-butane diol. This blend or physical mixture was then reacted with 0.564 moles (141 grams) of 4,4'-methylene-bis (phenyl isocyanate) (MDI) by a standard high temperature random melt polymerization procedure as described in Example 1. The sample was molded into a plaque and the physical properties were measured. The sample had a volume resistivity of 9.5 x $10^9$ Ohms-cm and a refractive index of 1.518.

Example 6

COMPOUNDING PROCEDURES

A. Compression Molding

In a Waring blender, 115g of polyvinyl chloride resin, 3.45g of organotin stabilizer, and about 2.0g of an antioxidant were blended. To this mixture was added 23.0g of the chain extended polymer of Example 2 (polyurethane 45). This was then milled to a uniform blend on a two roll mill at 340°-350°F for approximately 5-10 minutes. The mixture was removed from the mill and compression molded at 356°F to

produce a uniform plaque from which electrical and static decay results were measured. This example represents a formulation having 20 phr of chain extended polymer in polyvinyl chloride resin.

B. Injection Molding

The following ingredients, 1557g of polyvinyl chloride resin, 47.3g of an organotin stabilizer, 31.6g an antioxidant and 7.9g of a lubricant were mixed in a Henschel mixer for 2-3 minutes. The mixture was then placed on a two roll mill at 320-330°F and 473.3g of polyurethane 45 was added and the whole was milled for 10-15 minutes. The milled sheet was granulated, and then injection molded at 370-395°F. Surface resistivity of the molded plaques was 4.8 x $10^{11}$ Ohms/sq and volume resistivity was 2.6 x $10^{11}$ Ohms-cm. Static decay results are given in Table I.

Example 7

The chain extended polymer of Example 2 (polyurethane 45) was compression molded into plaques. The static decay and volume resistivity was then measured. Also, several blends, *i.e.*, different loadings of polyurethane 45 in PVC were prepared and compression molded the static decay rates were measured after being conditioned for 48 hours at 15% relative humidity (RH) and unconditioned. These results are summarized in Table I. The volume resistivity of the plaques was also measured. These results are summarized in Table II.

TABLE I

| **STATIC DECAY** Seconds | | | | | |
|---|---|---|---|---|---|
| PVC | | 15% RH | | Unconditioned | |
| Matrix Polymer Parts by Wt. | Polyurethane 45 Parts by Wt. | 10% | 0% | 10% | 0% |
| 0 | 100 | 0.19 | 0.43 | 0.05 | 0.09 |
| 100 | 20 | 5.6 | >60 | 2.4 | 17 |
| 100 | 25 | 1.1 | 5.1 | 0.87 | 2.8 |
| 100 | 30 | 0.5 | 1.8 | 0.4 | 1.1 |
| 100 | 40 | 0.2 | 0.5 | 0.12 | 0.29 |
| 100 | 30* | 0.5 | 1.9 | 0.3 | 0.8 |

*Injection molded

TABLE II

| **ELECTRICAL RESISTIVITY PVC/POLYURETHANE 45** | | |
|---|---|---|
| Polyurethane 45 Wt.Pts./100 Wt.Pts.PVC | Surface Resistivity Ohms/sq | Volume Ohms-cm |
| 20 | 4.8 x $10^{13}$ | 2.8 x $10^{13}$ |
| 25 | 3.0 x $10^{12}$ | 1.5 x $10^{13}$ |
| 30 | 1.2 x $10^{13}$ | 2.8 x $10^{12}$ |
| 40 | 4.8 x $10^{11}$ | 1.5 x $10^{12}$ |

Example 8

The chain extended polymer of Example 2 (polyurethane 45) was blended with several resins, CPVC, ABS, polystyrene, and a vinyl chloride/acrylate copolymer using the procedure described in Example 6A. The blends contain 30 parts by weight of polyurethane 45 per 100 parts of the matrix polymer except for the polystyrene sample which contained 100 parts by weight of polyurethane 45 per 100 parts of the matrix polymer. These blends were compression molded and the static decay was measured. The results are

summarized in Table III below.

## TABLE III

**Polyurethane 45**

30 Parts by Weight Per 100 Parts by Weight of Matrix Polymer

| Matrix Polymer | STATIC DECAY Seconds 15% RH 10% | 0% | Unconditioned 10% | 0% |
|---|---|---|---|---|
| CPVC[1] | 0.04 | 0.45 | 0.02 | 0.03 |
| ABS[2] | 0.09 | 0.20 | * | * |
| Polystyrene[3] (100 phr) | 1.14 | 2.89 | 1.03 | 2.78 |
| Acrylate[4] Copolymer | 0.5 | 1.89 | 0.25 | 0.80 |
| PVC (resin) | 0.5 | 1.8 | 0.4 | 1.1 |

[1] Chlorinated PVC sold as Temprite 3504 by The B.F.Goodrich Company.

[2] Acrylonitrile/Butadiene/Styrene polymer sold as Abson 820X17 by General Electric.

[3] Gulf MC-2100.

[4] Injection molded.

*Not Measured

Example 9

Several chain extended polymers were prepared polyurethane 45, polyurethane 56, polyurethane 64 and polyurethane 72 each having 45, 56, 64 and 72 percent ethylene oxide oligomer, respectively. Compositions were prepared using polyvinyl chloride and each of the polyurethanes. These blends contained 30 parts by weight of the respective polyurethane per 100 parts by weight of PVC. These blends were compression molded and the static decay was measured. The results are summarized in Table IV below.

TABLE IV

POLYURETHANES

30 Wt. Parts Polyurethane/100 Wt. Parts PVC

| Compound | STATIC DECAY Seconds 15% RH 10% | 15% RH 0% | Unconditioned 10% | Unconditioned 0% |
|---|---|---|---|---|
| Polyurethane 45 | 0.5 | 1.8 | 0.4 | 1.1 |
| Polyurethane 56 | 0.4 | 1.3 | 0.4 | 1.4 |
| Polyurethane 64 | 1.4 | 6.4 | 0.8 | 2.1 |
| Polyurethane 72 | 1.4 | 3.3 | 0.3 | 1.0 |
| PVC | * | * | * | * |

*Insulator

Example 10

Polyvinyl chloride (PVC) and several test plaques containing blends of 100 parts PVC and 30 parts ESD (antistatic) additives were prepared. The ESD additives compared were polyurethane 45, polyurethane 56, and a commercial ethylene oxide-epichlorohydrin (EO-ECH) copolymer. Also, a test plaque of a blend of 100 parts of vinyl chloride/acrylate copolymer and 30 parts polyurethane 45 was prepared. These plaques were compared for light transmission and percent haze. The results obtained show that haze can be reduced and light transmission increased when the refractive index of the two materials has been properly matched. Further, the results show that the commercially available antistatic materials are not suitable for clear applications. The results for percent light transmission were as measured according to ASTM D-1003 and for percent haze as measured using a Hunterlab model D-54P-5 spectrophotometer or equivalent. The results are summarized in Table V.

TABLE V

| LIGHT TRANSMISSION | | |
|---|---|---|
| Sample | % Transmission | % Haze |
| PVC (Control) | 85.8 | 10.6 |
| PVC/Polyurethane 45 | 80.1 | 67.7 |
| Copolymer Resin/Polyurethane 45 | 64.0 | 48.3 |
| PVC/Polyurethane 56 | 73.4 | 40.5 |
| PVC/EO-ECH Copolymer | 42.7 | 98.3 |

Example 11

In a Henschel blender, 100 g of polyvinyl chloride resin, 3.00 g of organotin stabilizer, 0.5 g of lubricant and 2.0 g of an antioxidant were blended. To this mixture was added a mixture of 30.0 g of the chain extended polymer of Example 2 (polyurethane 45) and 2.0 g of lithium trifluoromethane sulfonate. This was then milled to a uniform blend on a two roll mill at 340°-350°F for approximately 10 minutes. The mixture was removed from the mill and compression molded at 350°F to produce a uniform plaque from which electrical and static decay results were measured.

Example 12

The following salts, sodium lauryl sulfate, 2.0 g, sodium styrene sulfate, 2.0 g and lithium trifluoromethane sulfonate, 2.0 g, were blended with the chain extended polymer of Example 2 (polyurethane 45) and polyvinyl chloride according to the procedure of Example 11. These were employed to prepare a series of samples which were evaluated for electrical properties. The results are tabulated in Tables VI and VII.

Example 13

Lithium trifluoromethane sulfonate; 5.0 g, and sodium styrene sulfate, 5.0 g, were blended with the chain extended polymer of Example 2 (polyurethane 45) and polyvinyl chloride according to the procedure of Example 11. These were employed to prepare a series of samples which were evaluated for electrical properties. The results are tabulated in Table VIII.

TABLE VI

| Salt | Phr | Static Decay Rate, Seconds | | | |
|---|---|---|---|---|---|
| | | Unconditioned | | Conditioned 48 Hrs* | |
| | | 10% | 0% | 10% | 0% |
| None | - | 0.43/0.44 | 1.00/1.31 | 0.52/0.55 | 1.27/1.58 |
| Lithium Trifluoro Methane Sulfonate | 2 | 0.01/0.01 | 0.01/0.02 | 0.01/0.01 | 0.01/0.02 |
| Sodium Styrene Sulfonate | 2 | 0.20/0.19 | 0.55/0.60 | 0.27/0.27 | 0.73/0.87 |
| Sodium Lauryl Sulfate | 2 | 0.01/0.01 | 0.02/0.03 | 0.01/0.01 | 0.03/0.02 |

Samples were compression molded.
*Samples conditioned at 15% RH for 48 hours prior to testing.
/Designation - 1st number at + 5KV, 2nd at -5KV.

TABLE VII

| Salt | Phr | Surface Resistivity Ohms/sq | Volume Resistivity Ohms-Cm |
|---|---|---|---|
| None | - | $1.2 \times 10^{12}$ | $3.3 \times 10^{11}$ |
| Lithium Trifluoro Methane Sulfonate | 2 | $3.6 \times 10^{9}$ | $2.0 \times 10^{9}$ |
| Sodium Styrene Sulfonate | 2 | $3.6 \times 10^{10}$ | $1.25 \times 10^{11}$ |
| Sodium Lauryl Sulfate | 2 | $2.6 \times 10^{11}$ | $4.5 \times 10^{11}$ |

TABLE VIII

| Salt | Phr | Static Decay Rate, Seconds | | | | % Haze |
|---|---|---|---|---|---|---|
| | | Unconditioned | | Conditioned 48 Hrs.* | | |
| | | 10% | 0% | 10% | 0% | |
| None | - | 0.40/0.40 | 1.18/1.82 | 0.54/0.59 | 1.58/3.8 | 74.2 |
| Lithium Trifluoro Methane Sulfonate | 5 | 0.01/0.01 | 0.01/0.01 | 0.01/0.01 | 0.01/0.01 | 24.6 |
| Sodium Styrene Sulfonate | 5 | 0.08/0.07 | 0.28/0.5 | 0.10/0.10 | 0.33/0.43 | 61.7 |

Samples were compression molded.
*Samples conditioned at 15% RH for 48 hours prior to testing.
/Designation - 1st number at + 5KV, 2nd at -5KV.

EXAMPLE 14

Compositions compromising polyvinyl chloride and a blend of a polyamide chain extended polyether and a salt can be prepared. The chain extended polyether was derived from co-condensation of a polymer of caprolactam and adipic acid with polyethylene glycol to form a block copolymer. It can now be contemplated tht alternative poly amide - polyether block copolymers are suitable and can be derived from a diterminal amine functional polyamide and a di-terminal carboxylic polyether.

In yet another embodiment blends of PVC and polyamide-polyether block copolymer can be made wherein the block copolymer is derived from a di-terminal carboxylic polyamide and di-terminal amine functional polyether. In the examples below a di-terminal carboxylic polyamide co-condensed with di-terminal hydroxyl polyether was used.

Polyethers which are chain extended by copolycondensation with di-terminal carboxylic polyamide are referred to as polyetheresteramide block copolymers. For example linear aliphatic polyamides prepared by conventional means, ***e.g.*** polycondensation of an organic diacid and diamine reacted in the presence of an excess of an organic diacid. The average molecular weight of the diterminal acid polyamide segment suitably used here can vary from about 300 to about 15,000. Polyamide molecular weight can be controlled by the level of excess diacid present during condensation. Polyamides designated 6-6, 6-9, 6-10,6-12 and 9-6 represent condensation reactions of hexamethylene diamine and adipic acid, azelic acid, sebacic acid, 1,12-dodecanoic acid and of nonamethylene diamine and adipic acid, respectively. Chain terminating diacids can be preferably $C_4$ to $C_{20}$ aliphatic dicarboxylic acids. Exemplary dicarboxylic acids are succinic acid, adipic acid, sebacic acid, undecanedioic acid and dodecane- dioic acid.

The polyethers chain extended with a diterminal carboxylic polyamide have hydroxyl terminal chain ends and are derived from hydroxyl terminal chain ends and are derived from polymers of the aforementioned linear glycols and alternatively branched glycols. Exemplary polyethers are dydroxyl terminal polyoxyethylene glycol, polyoxypropylene glycol, polyoxytetramethylene glycol, with polyethers derived from the cyclic ethers outlined above being preferred. The average molecular weight of the suitable polyether segment here used can vary from 200 to 10,000, preferably 6,000 to 10,000. Preferbly equimolar amounts of diacidic polyamide and hydroxyl terminal polyether are copolycondensed under inert atmosphere in the presence of a catalyst. Suitable catalysts are metal tetraalkoxides. Examples of these are $Zr(OC_2H_5)4$, $Ti(OC_4H_9)4$ and tetralkylorthotitanate such as tetrabutylorthotitanate in alkaline alcoholate dispersion. The reaction is carried out preferably in the fluid state under stirring and high at temperatures between 100°C and 300°C. The reaction times vary under different conditions and with different reactants from 10 minutes to 10 hours.

Preferred polyamide-polyether block copolymers employed in blends with PVC will be partially amorphous, with the most preferred blends used in injection moldable embodiments containing substantially amorphous polyamide-polyether block copolymers. Such amorphous polyamides are polycondensates of diamines and isophthalic acid or terephthalic acid or combinations of one of these with an aliphatic dicarboxylic acid.

EXAMPLE 15

Polyvinyl chloride prepared by the Jones method is treated with Disodium phosphate (DSP) prior to compounding by adding a 10% solution of DSP in deionized water (10 parts of DSP and 90 parts of water) to the resin in a fluidized bed dryer. The PVC is blended with the chain extended polymer of Example 2 (polyurethane 45) according to the procedure of Example 11.

The above preferred embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

**Claims**

1. An electrostatic dissipative polymeric composition comprising:
   (1) from 3 parts to 100 parts by weight of a chain extended polymer having electrostatic dissipative properties said chain extended polymer comprising:
   (A) a low molecular weight polyether oligomer having two reactive moieties and an average molecular weight from 200 to 10,000 wherein the oligomer is a homopolymer or a copolymer of two or more copolymerizable cyclic ether monomers having the formula:

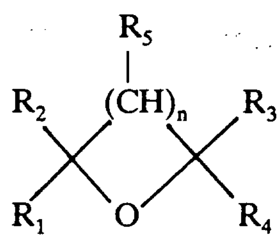

   wherein $R_1$, $R_2$, $R_3$, $R_4$, and $R_5$ are independently hydrogen, unsubstituted or substituted alkyl, alkenyl, cycloalkyl, cycloalkenyl, aryl, aralkyl or alkaryl, the substituents are $OR_6$, $SR_6$, CN, $COOR_6$, or halogens;
   $R_6$ is independently hydrogen, alkyl, alkenyl, cycloalkyl, cycloalkenyl, aryl, aralkyl, alkaryl, or carboxyl; the reactive moieties are OH, $NH_2$, or $NHR_6$; and
   n is 0, 1,2, or 4;
   (B) from 0 moles to 35 moles of a modifier for each mole of low molecular weight polyether;
   (C) a chain extender; with the proviso that the number of moles of chain extender per mole of the sum of the number of moles of low molecular weight polyether oligomer plus the number of moles of modifier is from 0.95 to 1.06; and
   (D) from 0.5 part to 25 parts of at least one salt for each 100 parts of chain extended polymer; and
   (II) 100 parts by weight of at least one matrix polymer.

2. The electrostatic dissipative composition of Claim 1 wherein the salt is lithium trifluoromethane sulfonate, lithium, sodium lauryl sulfate, disodium phosphate or sodium styrene sulfate.

3. The electrostatic dissipative polymeric composition of Claim 1 having from 1.0 part to 20 parts by weight of the salt per 100 parts by weight of the chain extended polymer and from 5 parts to 35 parts by weight of the chain extended polymer per 100 parts by weight of the matrix polymer.

4. The electrostatic dissipative composition of Claim 1 wherein the number of moles of chain extender per total number of moles of the low molecular weight polyether oligomer plus the total number of moles of the modifier is from 0.97 to 1.03.

5. The electrostatic dissipative composition of Claim 1 wherein the modifier is a diol or a diamine.

6. The electrostatic dissipative composition of Claim 1 wherein the modifier is 1,4-butanediol.

**7.** The electrostatic dissipative composition of Claim 1 wherein the low molecular weight oligomer is a polymer of cyclic ether monomers having the formula:

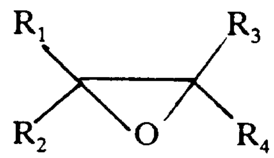

wherein $R_1$, $R_2$, $R_3$, and $R_4$ are as defined above.

**8.** The electrostatic dissipative composition of Claim 7 wherein the cyclic ether is ethylene oxide.

**9.** The electrostatic dissipative composition of Claim 1 wherein the low molecular weight oligomer is a copolymer of ethylene oxide and at least one other copolymerizable monomer.

**10.** The electrostatic dissipative composition of Claim 9 wherein the copolymerizable monomer is propylene oxide, 1,2-butylene oxide, epichlorohydrin, allyl glycidyl ether, n-butyl glycidyl ether, glycidyl acrylate, glycidyl methacrylate, 2-ethylhexyl glycidyl ether, tetrahydrofuran, or styrene oxide.

**11.** The electrostatic dissipative composition of Claim 1 wherein the chain extender is a difunctional organic compound.

**12.** The electrostatic dissipative composition of Claim 11 wherein the difunctional organic compound is a diisocyanate or a diacid derivative.

**13.** The electrostatic dissipative composition of Claim 12 wherein the diisocyanate is 4,4'-methylenebis-(phenyl isocyanate).

**14.** The composition of Claim 1 wherein the chain extended polymer is a solid material at room temperature having melt indices from 0.05 grams to 110 grams per 10 minutes.

**15.** The composition of Claim 14 wherein the chain extended polymer is a solid material at room temperature having melt indices from 1.0 grams to 65 grams per 10 minutes.

**16.** The composition of Claim 1 wherein the matrix polymer is:

polyvinyl chloride; chlorinated polyvinyl chloride; a copolymer of styrene and acrylonitrile; a terpolymer of styrene, acrylonitrile, and diene rubber; a copolymer of styrene and acrylonitrile modified with acrylate elastomers; a copolymer of styrene and acrylonitrile modified with ethylene propylene diene monomer rubber; a copolymer of polystyrene and rubber modified impact polystyrene; nylon; polycarbonate; thermoplastic polyester including polybutylene terephthalate, polyethylene terephthalate and polyether-ester block copolymer; polyurethane; thermoplastic polyurethane; polyphenylene oxide; polyacetal; polymethyl methacrylate; or mixtures thereof.

**17.** The electrostatic dissipative polymeric composition of Claim 1 wherein the composition is characterized by a high degree of clarity as defined by having:

(I) a percent light transmission greater than 50% for a 20 mil film; and

(II) a percent haze value less than 60% for a 20 mil film.

**18.** The electrostatic dissipative polymeric composition of Claim 17 wherein the composition is characterized by a high degree of clarity as defined by having:

(I) a percent light transmission greater than 70% for a 20 mil film; and

(II) a percent haze value less than 30% for a 20 mil film.

**19.** A polymeric article wherein the article is formed from the polymeric composition comprising:

(I) from 3 parts to 100 parts by weight of a chain extended polymer having electrostatic dissipative properties said chain extended polymer comprising:

(A) a low molecular weight polyether oligomer having two reactive moieties and an average molecular weight from 200 to 10,000 wherein the oligomer is a homopolymer or a copolymer of two or more copolymerizable cyclic ether monomers having the formula:

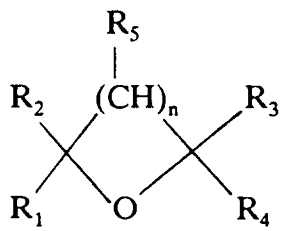

wherein $R_1$, $R_2$, $R_3$, $R_4$, and $R_5$ are independently hydrogen, unsubstituted or substituted alkyl, alkenyl, cycloalkyl, cycloalkenyl, aryl, aralkyl or alkaryl, the substituents are $OR_6$, $SR_6$, CN, $COOR_6$, or halogens;

$R_6$ is independently hydrogen, alkyl, alkenyl, cycloalkyl, cycloalkenyl, aryl, aralkyl, alkaryl, or carboxyl; the reactive moieties are OH, $NH_2$, or $NHR_6$; and

n is 0, 1, 2, or 4;

(B) from 0 moles to 35 moles of a modifier for each mole of low molecular weight oligomer; and

(C) a chain extender; with the proviso that the number of moles of chain extender per mole of the sum of the number of moles of low molecular weight polyether oligomer plus the number of moles of modifier is from 0.95 to 1.06;

(D) from 0.5 part to 25 parts of a salt for each 100 parts of chain extended polymer; and

(II) 100 parts by weight of at least one matrix polymer.

**20.** The article of Claim 19 wherein the matrix polymer is a polyvinyl chloride homopolymer or copolymer.

**21.** The article of Claim 19 wherein said article is selected from the group consisting of a sheet or film, tube, paper tray, business machine housing, part for within a business machine, antistatic mat, tote bin and floor tile.

**22.** A process for preparing an electrostatic dissipative polymeric composition comprising the step of:

(I) adding from 3 parts to 100 parts by weight of a chain extended polymer to at least one matrix polymer said chain extended polymer having electrostatic dissipative properties and said chain extended polymer comprising:

(A) a low molecular weight polyether oligomer having two reactive moieties and an average molecular weight from 200 to 10,000 wherein the oligomer is a homopolymer or a copolymer of two or more copolymerizable cyclic ether monomers having the formula:

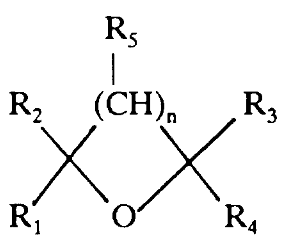

wherein $R_1$, $R_2$, $R_3$, $R_4$, and $R_5$ are independently hydrogen, unsubstituted or substituted alkyl, alkenyl, cycloalkyl, cycloalkenyl, aryl, aralkyl or alkaryl, the substituents are $OR_6$, $SR_6$, CN, $COOR_6$, or halogens;

$R_6$ is independently hydrogen, alkyl, alkenyl, cycloalkyl, cycloalkenyl, aryl, aralkyl, alkaryl, or carboxyl; the reactive moieties are OH, $NH_2$, or $NHR_6$; and

n is 0, 1, 2, or 4;

(B) from 0 moles to 35 moles of a modifier for each mole of low molecular weight polyether; and

(C) a chain extender; with the proviso that the number of moles of chain extender per mole of the sum of the number of moles of low molecular weight polyether oligomer plus the number of

moles of modifier is from 0.95 to 1.06;

(II) mixing the matrix polymer and the chain extended polymer to produce the electrostatic dissipative composition.

**23.** A clear polyvinyl chloride composition comprising polyvinyl chloride and an effective amount of an electrostatic dissipative additive said composition having one of the following electrical properties:

(a) surface resistivity of 1 x $10^{12}$ Ohms/sq, or less as measured according to ASTM D-257; or

(b) volume resistivity of 1 x $10^{12}$ Ohms-cm or less as measured according to ASTM D-257; and, having the following optical properties:

(I) a percent light transmission greater than 50% for 20 mil film; and

(II) a percent haze value less than 60% for a 20 mil film.

**24.** The electrostatic dissipative polymeric composition of Claim 23 wherein said composition has the following electrical properties:

(a) surface resistivity of 1 x $10^{11}$ Ohms/sq or less and;

(b) volume resistivity of 1 x $10^{11}$ Ohms-cm or less.

**25.** The electrostatic dissipative polymeric composition of Claim 23 wherein the polyvinyl chloride is a homopolymer or a copolymer.

**26.** An electrostatic dissipative polymeric composition comprising:

(I) from 3 parts to 100 parts by weight of a chain extended polymer having electrostatic dissipative properties said chain extended polymer comprising:

(A) a low molecular weight polyether oligomer having two reactive moieties and an average molecular weight from 200 to 10,000 wherein the oligomer is a homopolymer or a copolymer of two or more copolymerizable cyclic ether monomers having the formula:

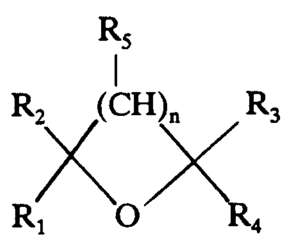

wherein $R_1$, $R_2$, $R_3$, $R_4$, and $R_5$ are independently hydrogen, unsubstituted or substituted alkyl, alkenyl, cycloalkyl, cycloalkenyl, aryl, aralkyl or alkaryl, the substituents are $OR_6$, $SR_6$, CN, $COOR_6$, or halogens;

$R_6$ is independently hydrogen, alkyl, alkenyl, cycloalkyl, cycloalkenyl, aryl, aralkyl, alkaryl, or carboxyl; the reactive moieties are OH, $NH_2$, or $NHR_6$; and

n is 0, 1, 2, or 4; wherein said low molecular weight polyether oligomer is end capped with ethylene oxide or ethylene imine thereby providing an oligomer having two primary moieties;

(B) from 0 moles to 35 moles of a modifier for each mole of low molecular weight polyether; and

(C) a chain extender; with the proviso that the number of moles of chain extender per mole of the sum of the number of moles of low molecular weight polyether oligomer plus the number of moles of modifier is from 0.95 to 1.06;

(D) from 0.5 part to 25 parts of a salt for each 100 parts of chain extended polymer; and

(II) 100 parts by weight of at least one matrix polymer.

**27.** The electrostatic dissipative composition of Claim 26 wherein the number of moles of chain extender per total number of moles of the low molecular weight polyether oligomer and the modifier is from 0.97 to 1.03.

**28.** The electrostatic dissipative composition of Claim 26 wherein the low molecular weight oligomer is a polymer of cyclic ether monomers having the formula:

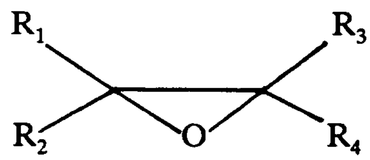

wherein $R_1$, $R_2$, $R_3$, and $R_4$ are as defined above.

**29.** The electrostatic dissipative composition of Claim 26 wherein the modifier is a diol or a diamine.

**30.** An electrostatic dissipative (ESD) polymeric composition comprising:
(I) 100 weight parts polyvinyl chloride
(II) from 3 to 100 weight parts of a block copolymer derived from the co-poly condensation of di-terminal functional segment of polyamide and a di-terminal functional polyether segment.
(III) from 0.5 parts to 25 parts of at least one salt per 100 parts of block copolymer.

**31.** The ESD polymeric composition of Claim 30 wherein the di-terminal functional polyamide contains at both ends, terminal carboxylic acid function and said polyether contains at both ends, terminal hydroxyl function.

**32.** The ESD polymeric composition of Claim 30 wherein the polyamide block segment is at least partially amorphous.

**33.** The ESD polymeric composition of Claim 30 wherein the polyamide block segment is substantially amorphous.

**34.** The electrostatic dissipative composition of Claim 30 wherein the salt is lithium trifluoromethane sulfonate, sodium lauryl sulfate, or sodium styrene sulfate.

**35.** The electrostatic dissipative polymeric composition of Claim 30 having from 1.0 part to 20 parts by weight of the salt per 100 parts by weight of the block co-polymer.